# EUROPÄISCHE PATENTSCHRIFT

(11) **EP 0 994 231 B1**
(45) Veröffentlichungstag und Bekanntmachung des Hinweises auf die Patenterteilung: **29.01.2003**
(21) Anmeldenummer: 99120382.9
(22) Anmeldetag: 13.10.1999
(51) Int. Cl.: E05F 15/12

(54) **Kettenschubantrieb**
Thrust chain drive
Entraînement à chaîne en poussée

(30) Priorität: 14.10.1998 DE 29818339 U
(43) Veröffentlichungstag der Anmeldung: 19.04.2000
(73) Patentinhaber: Aumüller Aumatic GmbH, 86167 Augsburg (DE)
(72) Erfinder: Früh, Werner, 89312 Günzburg (DE)
(74) Vertreter: Ernicke, Hans-Dieter, Dipl.-Ing.

(56) Entgegenhaltungen:
- EP-A- 0 708 218
- AU-B- 516 364
- GB-A- 2 225 609
- US-A- 1 333 595

## Beschreibung

Die Erfindung betrifft einen Kettenschubantrieb mit den Merkmalen im Oberbegriff des Hauptanspruches.

Ein solcher Kettenschubantrieb ist aus der DE-G 295 14 179 bekannt. Er besitzt einen Motor mit einer Kette, die zusammen in einem Gehäuse untergebracht sind. Das Gehäuse hat einen Kettenaustritt, der die auslaufende Kette starr in Hubrichtung leitet und stützt. Das Kettenende ist gelenkig an einem ausschwenkbaren Fensterflügel gelagert, wobei diese Lagerung mit einer Wippe und einer Feder ausgerüstet sein kann. Der vorbekannte Kettenschubantrieb ist nicht in der Lage, die Kette im gewünschten Maß auf Zug und Druck ohne Einknickgefahr belasten zu können. Die aufnehmbaren Lasten und die Hublängen sind deutlich beschränkt. Dabei sind Torsionsprobleme und auch Schwierigkeiten mit Polygonschlägen der Kette zu beobachten. Es ergeben sich hohe Belastungen für Getriebe und Führung und auch für die Fensterflügel. Unter Umständen kann das Fenster nicht mehr richtig oder vollständig schließen. Diese Effekte verstärken sich mit der Laufzeit und erhöhen den Verschleiß der Kette. Außerdem bestehen durch die federnde Lagerung des Kettenendstücks erhebliche Platz- und Handhabungsprobleme bei der Montage. Nicht zuletzt ist auch durch den erhöhten Platzaufwand in manchen Fällen eine sichere Schließfunktion des Fensters nicht gewährleistet.

Die EP-A-0 708 218 zeigt einen ähnlichen Kettenschubantrieb, der ebenfalls einen Kettenaustritt mit einer starren Auslassführung aufweist. Die Kette läuft hierbei zumindest auf einer Seite an einer ortsfesten Gehäuseschulter entlang. In einer Ausführungsform ist hierbei eine Blattfeder am Kettenauslass vorhanden, die die Kette gegen diese Schulter drückt. Hierdurch wird die Kette gezwungen, in einer die Kettendurchbiegung nach unten fördernden Richtung aus dem Antrieb aus- und einzulaufen.

Es ist Aufgabe der vorliegenden Erfindung einen besseren Kettenschubantrieb aufzuzeigen.

Die Erfindung löst diese Aufgabe mit den Merkmalen im Hauptanspruch. Der erfindungsgemäße Kettenschubantrieb hat durch die bewegliche Auslaßführung den Vorteil, daß die Kette sich besser führen und montieren läßt. Sie fährt mit weichen Bewegungen und weitgehend ruckfrei ein und aus. Der Polygoneffekt der Kette wird durch Mitwippen ausgeglichen. Die Belastungen und der Verschleiß für die Kette und die anderen Antriebsteile sowie die Öffnungselemente, z.B. Fensterflügel, sind wesentlich verringert. Vorteilhaft sind ferner die wesentlich erhöhten Schubkräfte und Hublängen des Kettenschubantriebs.

Insbesondere ist auch der Platz- und Bauaufwand wesentlich verringert. Der Kettenschubantrieb läßt sich sehr nahe am öffnungselement und am Kettenbeschlag montieren. Für die Montage ist es ferner vorteilhaft, wenn der Kettenschubantrieb ein Getriebe mit einer ausrückbaren Getriebestufe besitzt, wodurch auf einfache Weise ein Freilauf geschaffen wird. Hierdurch wird insbesondere auch die Demontage erleichtert. Die Kette kann ohne Stromversorgung des Antriebs an der Baustelle von Hand aus dem Antriebsgehäuse gezogen werden.

Bei Einsatz einer schubfesten und insbesondere rückensteifen Kette kann zudem die Kette mit hoher Betriebssicherheit auf Zug und Druck belastet werden. Ein unerwünschtes Einknicken unter Druck wird zuverlässig verhindert. Hierbei wirkt sich das vorzugsweise als Feder ausgebildete Stellelement vorteilhaft aus, das die Auslaßführung in Schwenkstellung und die Kette bei Schuboder Druckbelastung in eine Stützstellung zu bringen trachtet. Insbesondere hat dabei der erfindungsgemäße Kettenschubantrieb den Vorteil, daß eine im Rahmen der Abstützung sich ergebende Kettenbiegung beim Einfahren der Kette wieder zuverlässig aufgehoben wird.

Die Auslaßführung ist vorteilhafterweise schwenkbar um die Drehachse eines nahe des Kettenaustritts angeordneten Kettenritzels gelagert. Dadurch ergeben sich optimale kinematische Bedingungen für das Ein- und Ausfahren sowie das sichere Führen der Kette. Von besonderem Vorteil ist hierbei die im bevorzugten Ausführungsbeispiel gezeigte Bauform der Auslaßführung mit dem schwenkbaren hohlen Führungsgehäuse und dem relativ ortsfesten Führungsteil. Durch den gegenseitigen Eingriff dieser beiden Teile und des Kettenritzels ergibt sich eine kinematisch günstige und platzsparende Bauform.

Durch die ortsfeste Rollenführung ist in Verbindung mit dem Kettenritzel für alle Schwenkpositionen der Auslaßführung eine sichere Kettenführung gewährleistet. Insbesondere hat die Schwenkstellung der Auslaßführung keine ungünstigen Rückwirkungen'auf den noch im Antriebsgehäuse befindlichen Kettenteil. Dieser Kettenteil kann vielmehr stets unabhängig von der Schwenkstellung mit dem gleichen Winkel in die Auslaßführung ein- und auslaufen. Durch die konzentrische Lagerung der Auslaßführung bezüglich des Kettenritzels kann die Antriebskinematik für alle Schwenkstellungen stets gleich bleiben.

Aufgrund der Aufteilung der Auslaßführung in ein schwenkbar gelagertes und ein relativ ortsfestes Führungsteil ergeben sich für die unterschiedlichen Kettenteile in vorteilhafter Weise unterschiedliche Führungsbedingungen. Die Rollen der Ketten sind zwischen der Rollenführung und dem Ritzel im Führungsbereich eingespannt und zuverlässig im Bogen geführt. Die Führung der Kette am Austritt aus dem Antriebsgehäuse wird vom schwenkbaren Führungsteil, insbesondere dem hohlen Führungsgehäuse übernommen. Die Schwenkbewegung wirkt sich wahlweise unmittelbar auf die Kettenlaschen oder mittelbar über die Rollen aus. Hierfür ist bei einer rückensteifen Kette ein gerades Rückenteil der Kettenlaschen von Vorteil. Das Führungsgehäuse sorgt über den Führungskanal und eine profilierte Kanalöffnung für eine sichere und zuverlässige Führung und Ausrichtung der aus- und einlaufenden Kette. Ein vorstehender Führungsfinger kann die Führungssicherheit verbessern.

Von besonderem Vorteil ist auch die Ausbildung des Kettenritzels mit einer Zykloid-Verzahnung oder einer ähnlichen Verzahnung. Dies sorgt für eine besonders zuverlässige und schlag- sowie stoßarme Führung der Kettenrollen.

Günstig ist außerdem die Anordnung eines Kettenanschlags am Führungsgehäuse. Dadurch kann beim Einlaufen der Kette ein endseitiges Kettenmundstück oder das Kettenende selbst durch die Kraft des Motors zuverlässig für eine Rückstellung des federbelasteten Führungsgehäuses sorgen. In eingefahrener Ruhestellung ist das Kettenende dadurch senkrecht zum Kettenaustritt ausgerichtet und läßt sich besonderes günstig montieren.

Der Schwenkweg der beweglichen Auslaßführung kann zur Anpassung an unterschiedliche Gewichte der bewegten Fenster, Türen, Klappen oder dergleichen begrenzt werden. Dies kann durch einen ortsfesten Gehäuseanschlag oder durch ein verstellbares Anschlagelement erfolgen. Alternativ läßt sich auch das Stellelement bzw. die Druckfeder in ihrer Stärke an unterschiedliche Gewichte anpassen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Figur 1:: einen Kettenschubantrieb mit teilweise aufgebrochenem Antriebsgehäuse und einer Detaildarstellung des Kettenaustritts,
- Figur 2 und 3:: abgebrochene und vergrößerte Draufsichten auf eine schwenkbare Auslaßführung für die Kette in Ruhe- und Schwenkstellung,
- Figur 4:: eine vergrößerte und teilweise aufgebrochene Ansicht der Auslaßführung,
- Figur 5 - 9:: verschiedene Darstellungen der Einzelteile der Auslaßführung mit Varianten,
- Figur 10 - 12:: verschiedene Darstellungen einer Anbaulage des Kettenschubantriebs,
- Figur 13:: eine vergrößerte Detailansicht einer ausrückbaren Getriebestufe und
- Figur 14:: eine Variante zu Figur 2 und 3 mit einem verstellbaren Anschlagelement für die Auslaßführung.

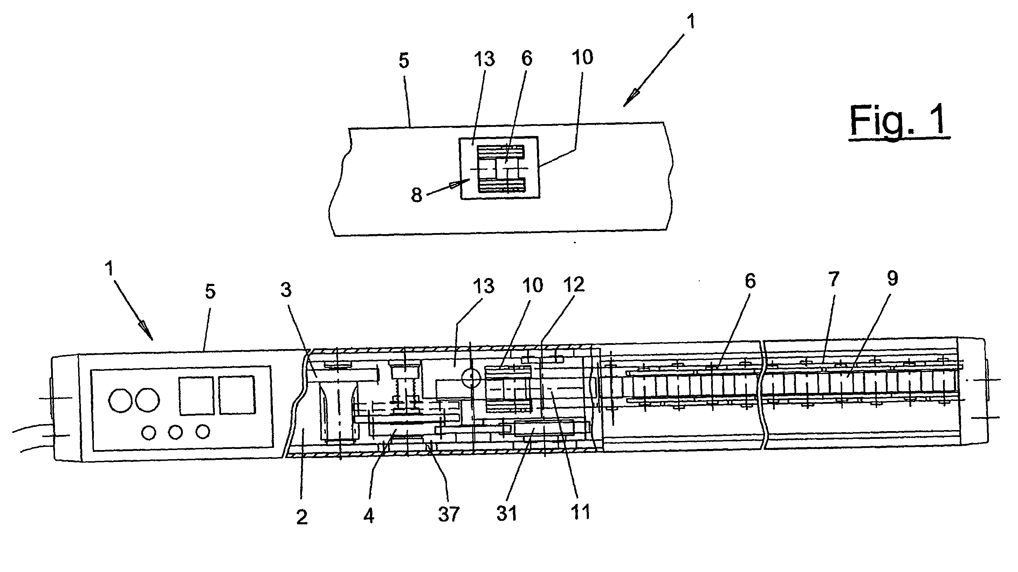

Figur 1 zeigt in einer teilweise aufgebrochenen Seitenansicht einen Kettenschubantrieb (1) mit einer Kette (6). Unter der Kette (6) wird im Sinne der Erfindung jedes Übertragungsorgan verstanden, das sich zumindest stellenweise krümmen oder biegen läßt und das Zug- und Druckkräfte übertragen kann. Hierbei kann es sich um die gezeigte übliche Gliederkette, aber auch um beliebige andere geeignete Übertragungsorgane handeln.

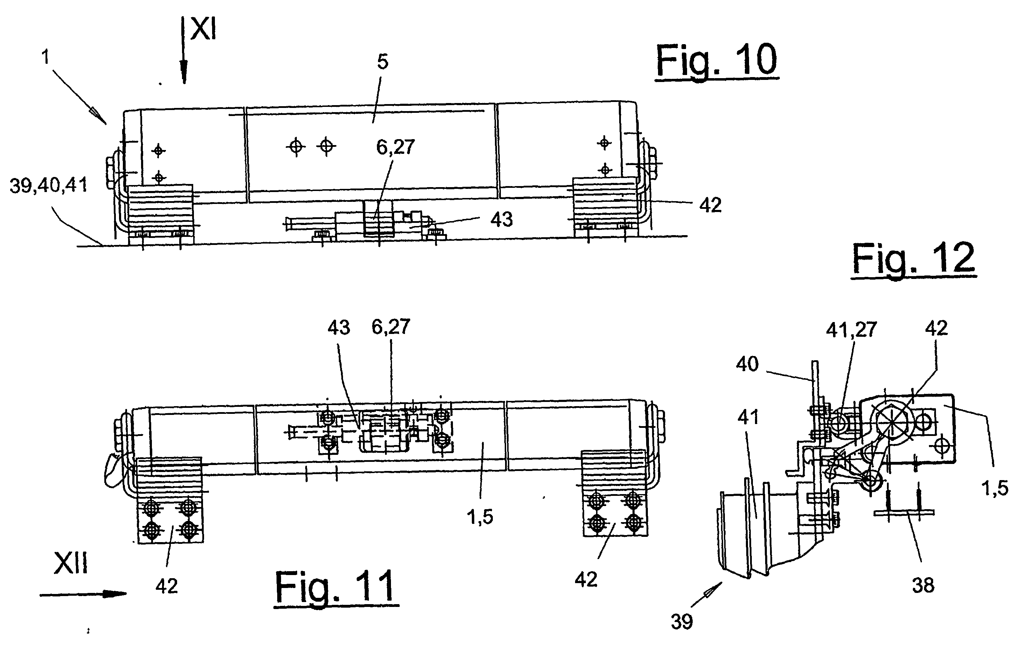

Der Kettenschubantrieb (1) ist für beliebige Zwecke einsetzbar. Ein bevorzugter Anwendungsbereich liegt bei schwenkbaren Fenstern, Klappen, Türen, Lichtkuppeln oder dgl. beweglichen Teilen (39), die durch die aus- und einfahrende Kette (6) geöffnet und geschlossen werden. Figur 10 bis 12 zeigen eine solche Anbaulage in Draufsicht, Stirn- und Seitenansicht. Pfeile geben die Blickrichtung an.

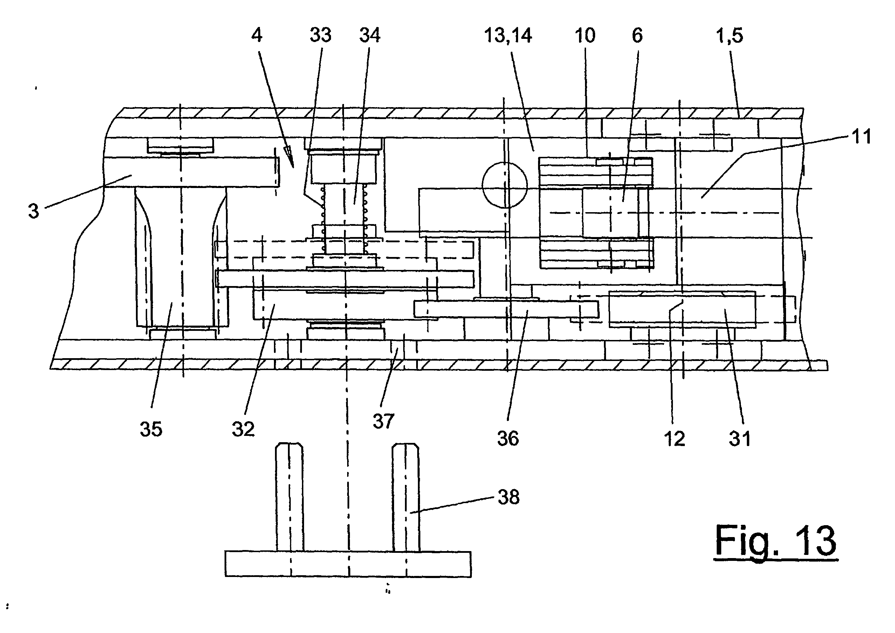

Der gezeigte Kettenschubantrieb (1) hat ein Antriebsgehäuse (5), in dem ein Motor (2), vorzugsweise ein Elektromotor, mit einem mehrstufigen Getriebe (3) und einer Steuerplatine untergebracht ist. Das Getriebe (3) ist bevorzugt als Zahnradgetriebe ausgebildet und kann eine ausrückbare Getriebestufe (4) (vergleiche Figur 13) zur Bildung eines Freilaufs aufweisen. Es besitzt ferner abtriebsseitig ein Kettenritzel (11) (vergleiche Figur 1, 2 und 3), das auf die ebenfalls im Antriebsgehäuse (5) in ein oder mehreren Lagen oder Bahnen untergebrachte Kette (6) einwirkt. Am vorzugsweise allseitig geschlossenen Antriebsgehäuse (5) ist eine seitliche Öffnung bzw. ein Kettenaustritt (10) vorgesehen, durch den die Kette (6) aus- und einlaufen kann.

Die Kette (6) ist vorzugsweise als Schubkette ausgebildet, die auf Druck und Schub belastbar ist. Sie besteht aus Rollen (9) mit innenliegenden Bolzen und Kettenlaschen (7). Die Kette (6) ist vorzugsweise rückensteif, wobei die Kettenlaschen (7) mit ihrem entsprechend ausgestalteten Rücken (8) sich in Längsrichtung auf Druckbelastung aneinander abstützen. Die Kette (6) kann sich dadurch um die Längsachsen der Rollen (9) nach vorn biegen bzw. abknicken. In Gegenrichtung nach hinten zum Rücken (8) hin findet jedoch eine Abstützung statt, um die Schub- und Druckkräfte übertragen zu können. Außerdem ist die Kette (6) durch geeignete Toleranzen auch in Querrichtung versteift und kann sich nicht oder kaum um die Kettenlaschen (7) biegen und sich auch im wesentlichen nicht um die Kettenlängsachse tordieren.

Der Kettenschubantrieb (1) hat nahe des Kettenaustritts (10) eine bewegliche Auslaßführung (13). Diese ist vorzugsweise um die Drehachse (12) des Kettenritzels (11) schwenkbar. Durch einen tangentialen linearen Kettenaustritt (10) sind stets gleichbleibende Schubvoraussetzungen erfüllt, wobei die Kette (6) unabhängig vom Transportgewicht und der Hublänge den erforderlichen Verfahrweg ohne negative Auswirkungen ihrer Eigenschaften gleiten kann. Die Rückensteifigkeit der Kette (6) wird dabei unmittelbar am Kettenritzel (11) eingeleitet, ohne daß dabei der Ablauf von Kette (6) und Kettenritzel (11) beeinflußt wird. Der Neigungswinkel der Kette (6) bzw. ihre Rückenbiegung verändern sich je nach Last und Hublänge. Die bei ausgefahrener Kette (6) eingeleitete hohe Vorspannkraft im Getriebe (3) reduziert sich am endseitig montierten Kettenmundstück (27) auf unwesentliche Schiebekräfte, beispielsweise zur Scharnierachse des in Figur 10 bis 12 gezeigten Rahmen-/Fensterverbundes (40,41).

Die bewegliche Auslaßführung (13) wird von einem Stellelement (15) beaufschlagt, das vorzugsweise als Feder, insbesondere als Druckfeder, ausgebildet ist. Das Stellelement (15) versucht die Auslaßführung (13) in Richtung Kettenvorderseite zu schwenken, wobei die auslaufende Kette (6) im Rückenbereich einen abstützenden Bogen ausführt. Der erzielte Kettenführungswinkel α hängt von der Schub- und Druckfestigkeit der Kette (6), ihrer Ausfahr- oder Hublänge und der gebildeten abstützenden Kettenbiegung ab. Er beträgt z.B. ca. 5 bis 15°.

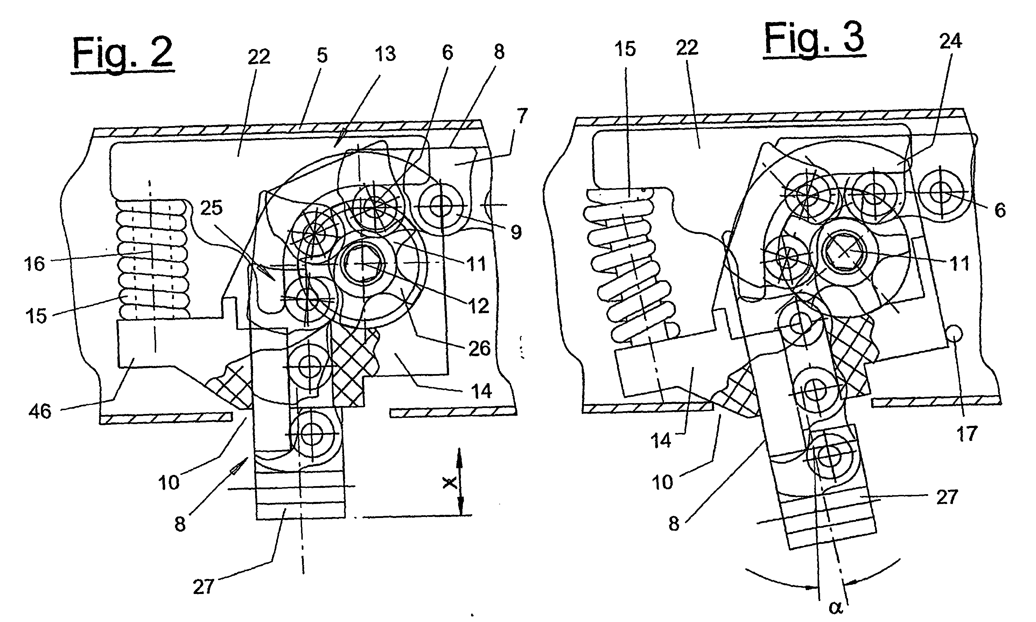

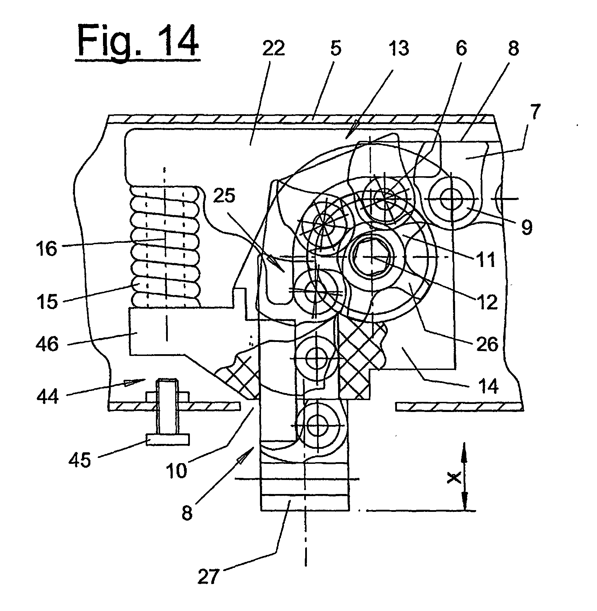

Der maximale Kettenführungswinkel α kann in geeigneter Weise begrenzt sein. Hierfür ist z.B. in Figur 3 ein relativ ortsfester Gehäuseanschlag (17) vorgesehen. In der Variante von Figur 14 ist ein verstellbares Anschlagelement (44) vorgesehen, das z.B. als eine von außen betätigbare Stellschraube (45) ausgebildet ist. Die Stellschraube (45) befindet sich neben dem Kettenaustritt (10) am Gehäuse (5) und wirkt auf einen Ansatz (46) des drehbaren Führungsgehäuses (14) ein. An diesem Ansatz (46) befindet sich gegenüberliegend der Zapfen (16) für die Führung der Druckfeder (15).

Durch das Anschlagelement (44) kann der Schwenkweg der Auslaßführung (13) auf unterschiedliche Gewichte der mit der Kette (6) betätigten Fensterflügel, Klappen, Türen, Lichtkuppeln oder dergleichen Teile (39) eingestellt werden. Für Fenster (39) oder dergleichen mit geringeren Gewichten ist es günstig, den Schwenkweg zu begrenzen. Für große Gewichte kann der Schwenkweg entsprechend größer sein, wobei bei maximalem Schwenkweg das Anschlagelement (44) vollkommen zurückbewegt und ohne Funktion ist. Die Einstellung der Stellschraube (45) kann über eine Skala (nicht dargestellt) im Schraubenbereich erfolgen. Die Einstellung kann aber auch bei laufendem Betrieb des Kettenschubantriebs (1) vorgenommen werden, wobei die Stellschraube (45) so lange verdreht wird, bis die Kette (6) bzw. der Fensterflügel (39) ruhig und schwingungsfrei laufen.

In einer weiteren Variante können die Anschläge (17,44) auch entfallen. Desgleichen ist es in einer zusätzlichen Abwandlung auch möglich, die Druckfeder (15) unterschiedlich stark auszubilden. Bei geringeren Gewichten der Fensterflügel (39) kommen dann entsprechend schwächere Federn (15) zum Einsatz. Weitergehende Abwandlungen sind auch hinsichtlich der konstruktiven Ausgestaltung des Anschlagelements (44) möglich.

Eine druck- und schubfeste Kette (6), insbesondere die gezeigte rückensteife Kette, unterliegt mit der Zeit einem gewissen Verschleiß, der sich durch x-fache Setzbeträge zwischen Kettenlaschen (7) und Rollen (9) bzw. deren innenliegenden Bolzen entsteht. Hierbei können auch Toleranzanpassungen eine Rolle spielen. Die Auswirkungen werden bemerkbar durch eine Rückenüberdehnung und eine Torsion des Kettenstranges. Mit der beweglichen Auslaßführung (13) werden diese Veränderungen zuverlässig aufgenommen, so daß die Betriebs- und Funktionssicherheit der Kette (6) gewährleistet ist. Dabei bringt die über das Stellelement (15) erreichte Kettenvorspannung und Rückenbiegung eine größere Sicherheit gegen Einbrechen der Kette (6). Je nach Hublänge und Transportgewicht richtet sich die Kette (6) nach mutwilligem Abdrücken außerdem in ihrer Rückensteifigkeit wieder von selbst in ihre ursprüngliche Position auf. Die entstehende Torsion wird durch eine Führung der außenliegenden Kettenlaschen (7) und/oder der Rollen (9) in der Auslaßführung (13) aufgefangen. Die Rückendehnung wird achsumschwenkend bezüglich der Drehachse (12) aufgenommen. Der Kettenverschleiß ist dadurch ohne Auswirkungen auf das Antriebsverhalten. Außerdem ist der Kettenschubantrieb besser auf Druck und Schub belastbar. Innerhalb des Schwenkbereiches wird ferner das Polygonverhalten des Kettenumlaufs über das Ritzel (11) durch Mitwippen der Auslaßführung (13) aufgenommen.

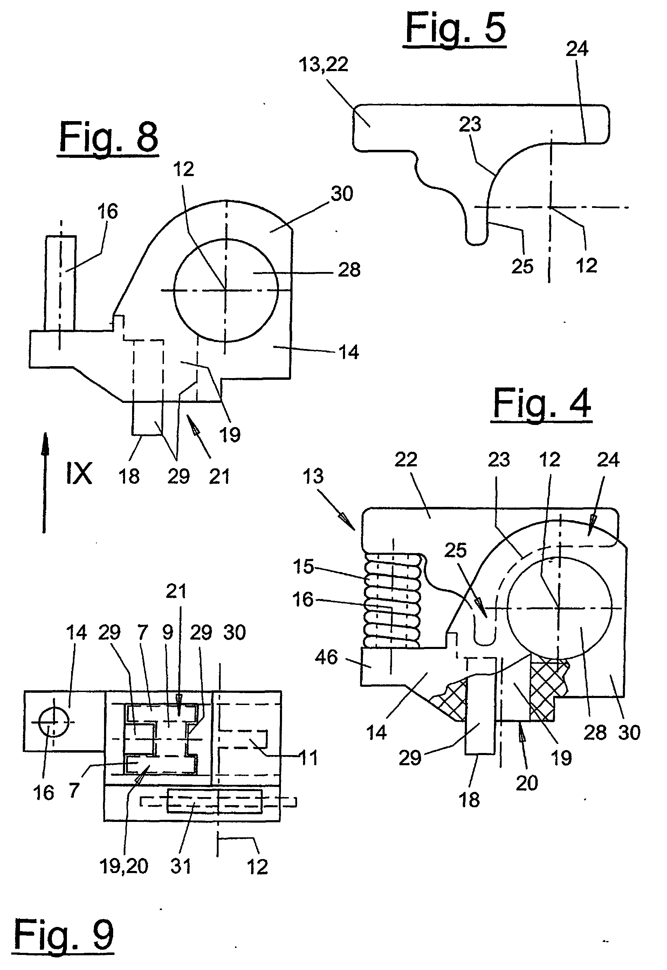

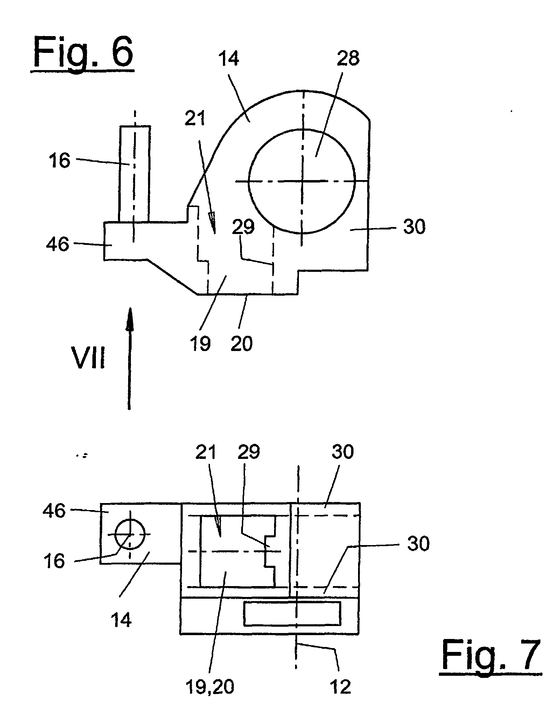

In Figur 4 bis 9 ist die Auslaßführung (13) in ihren Einzelteilen im Detail und mit zwei Varianten näher dargestellt. Figur 4, 5, 6 und 8 zeigen Draufsichten und Figur 7 und 9 Stirnansichten gemäß Pfeilen VIII und IX von Figur 6 und 8. Die Varianten betreffen zwei Gehäuseausführungen gemäß Figur 6, 7 und Figur 8, 9. Figur 1 zeigt in dem vergrößerten Detailausschnitt eine Stirnansicht des Kettenaustritts (10) mit Auslaßführung (13) und Kette (6).

Die Auslaßführung (13) besteht aus einem gegenüber dem Antriebsgehäuse (5) relativ ortsfesten Teil (22) und einem dem gegenüber vorzugsweise um die Drehachse (12) schwenkbaren zweiten Teil (14). Das relativ ortsfeste Teil (22) ist als Rollenführung für die Rollen (9) der Kette (6) ausgebildet und in Figur 4 und 5 näher dargestellt. Das bewegliche Teil (14) ist als hohles Führungsgehäuse (14) ausgebildet, das in geeigneter Weise, z.B. über ein oder zwei Augen (28), am Antriebsgehäuse (5) oder am Kettenritzel (11) schwenkbar gelagert ist. Das Führungsgehäuse (14) umgreift zumindest teilweise die Rollenführung (22) (vergleiche Figur 4) und das Kettenritzel (11) sowie ggf. ein zugehöriges Abtriebsrad (31) des Getriebes (3) gabelförmig (30) (vergleiche Figur 2 und 3). Die Gabelarme (30) beinhalten die Augen (28).

Die Rollenführung (22) besitzt einen Führungsbogen (23), der vorzugsweise einen 90°-Winkel umschreibt. Er hat einen Einlauf (24) für die aus dem Antriebsgehäuse (5) einlaufende Kette (6) und einen Auslauf (25), der zum Kettenaustritt (10) hin gerichtet ist. Der Einlauf (24) ist vorzugsweise parallel zur Längsachse des Antriebsgehäuses (5) ausgerichtet. Der Einlauf (24) und der Auslauf (25) bilden starre Führungen für die Kette (6).

Der Führungsbogen (23) ist zentrisch um die Ritzelachse (12) gekrümmt und derart gegenüber dem auf gleicher Höhe befindlichen Kettenritzel (11) im Abstand positioniert, daß die Rollen (9) zwischen den Zähnen (26) des Ritzels (11) und dem Führungsbogen (23) eingespannt sind. Dabei sind vorzugsweise stets mindestens drei Rollen (9) im Eingriff bzw. in der Führung.

Das Führungsgehäuse (14) umgreift mit den vorstehenden Gabelarmen (30) beidseitig die Rollenführung (22) und führt die Kette (6) längs der Rollenachsen nach oben und unten. Das Führungsgehäuse (14) führt dabei vorzugsweise die Kettenlaschen (7). Im Bereich der Rollenführung (22) kann dabei nur eine einfache Gleitführung nach oben und unten bestehen.

Zum Kettenaustritt (10) hin besitzt das Führungsgehäuse (14) einen umfangsseitig geschlossenen Führungskanal (19), der sich bei der in Figur 2 und 4 gezeigten Ruhe- oder Ausgangsstellung in gerader Verlängerung des Auslaufs (25) am Führungsbogen (23) erstreckt. Figur 3 verdeutlicht die Schwenkstellung.

Die Varianten von Figur 6, 7 und 8, 9 unterscheiden sich in der Gestaltung und Funktion des Führungskanals (19). In beiden Fällen kann zumindest im Bereich der zum Kettenaustritt (10) weisenden Kanalöffnung (20) oder auch über die gesamte Länge des Führungskanals (19) ein Führungsprofil (21) vorhanden sein.

Im Führungskanal (19) von Figur 6 und 7 werden die Kettenlaschen (7) durch das Führungsprofil (21) nach oben und unten und zudem an beiden Seiten geführt. Das Führungsprofil (21) hat einen zur Kettenvorderseite gerichteten vorspringenden, im wesentlichen quaderförmigen Führungsfinger (29), der die Innenseiten der Kettenlaschen (7) und gegebenenfalls auch die Rollen (9) an der Kettenvorderseite führt. Die gegenüberliegende Wand des Führungsprofils (21) ist eben.

Der Führungskanal (19) in der Bauvariante von Figur 8 und 9 hat an beiden Kanalseitenwänden einen in den Kanalinnenraum vorragenden Führungsfinger (29). Zwischen den beiden Führungsfingern (29) werden die Rollen (9) der Kette (6) geführt. In diesem Fall kann auf eine seitliche Führung der Kettenlaschen an den Kanalseitenwänden oberhalb und unterhalb der Führungsfinger (29) verzichtet werden. Der am Kettenrücken (8) liegende Führungsfinger (29) hat vorzugsweise eine größere Länge als der andere Führungsfinger (29) und steht axial über die Kanalöffnung (20) ein Stück vor. Die Länge dieses Führungsfingers (29) ist vorzugsweise so groß, daß stets mindestens zwei Kettenrollen (8) in Anlage sind. Über diesen rückenseitigen Führungsfinger (29) werden auch die Schwenkkräfte des Führungsgehäuses (14) auf die Kette (6) übertragen.

Das Führungsgehäuse (14) hat an seiner der Drehachse (12) abgewandten Rückseite einen Ausleger oder Ansatz (46) mit einem Zapfen (16) zur Führung der Druckfeder (15). Diese stützt sich relativ ortsfest an der Rollenführung (22) oder einer anderen geeigneten Stelle des Antriebsgehäuses (5) ab. Figur 2 zeigt in der Draufsicht die Ruhestellung und Figur 3 die Schwenkstellung der Auslaßführung (13) bzw. des Führungsgehäuses (14). Die Federkraft ist gegen die Rückensteife der Kette (6) gerichtet.

Das Kettenritzel (11) kann eine beliebig geeignete Verzahnung bzw. Zahnform aufweisen. In der bevorzugten Ausführungsform hat es eine Zykloidverzahnung. Es kann sich auch um eine ähnliche Verzahnung handeln. Beispielsweise ist auch eine Art Triebstockverzahnung möglich. Diese Verzahnungsarten sorgen für eine möglichst weitreichende und schlagarme Führung der Kettenrollen (9) und sind auch vorteilhaft mit Bezug auf die Einspannung der Kettenrollen (9) gegen den Führungsbogen (23). Bei dieser Verzahnungsart werden die Rollen (9) auch im Bereich des Zahnfußes geführt.

Die Kette (6) kann außenseitig das vorerwähnte Kettenmundstück (27) besitzen. Das Kettenmundstück (27) steht an ein oder mehreren Seiten außenseitig über die Kontur der Kette (6) vor und kommt bei eingefahrener Kette (6) in Anschlag im Bereich der Kanalöffnung (20). Der Motor (2) zieht dadurch über die einlaufende Kette (6) das Führungsgehäuse (14) gegen die Federkraft in die in Figur 2 und 4 gezeigte Ausgangsstellung.

Ergänzend kann das Führungsgehäuse (14) im Bereich der Kanalöffnung (20) einen axial vorstehenden Kettenanschlag (18) aufweisen. Dies kann zugleich der rückenseitige Führungsfinger (29) gemäß Figur 8 und 9 oder ein separater Anschlag sein.

Das Kettenmundstück (27) bzw. die endseitige Montagestelle (Kettenauge) der Kette (6) hat in eingefahrener Kettenstellung einen vorbestimmbaren Gehäuseabstand "X". In dieser gezeigten Ruhestellung verharrt das Kettenende bzw. das Kettenmundstück (27). Dadurch ist eine angenehme, maßlich bestimmbare Dreipunktmontage des Kettenschubantriebs (1) erreichbar. Insbesondere ergibt sich dadurch eine genau definierte Lage gegenüber dem am Kettenende anzuschließenden Öffnungselement (40), z.B. einem Fensterflügel. Fehlmontagen wie beim Stand der Technik sind dadurch ausgeschlossen. Nicht zuletzt ist ein sicheres Schließverhalten des Öffnungselementes (40) gewährleistet.

Figur 10 bis 12 zeigen die Anbaustellung des Kettenschubantriebs (1) am Beispiel eines Fensters (39). Der Kettenschubantrieb (1) ist mit seinem Antriebsgehäuse (5) über einen Gehäusebeschlag (42) am beweglichen Fensterflügel (40) angeordnet und um die Gehäuselängsachse drehbar gelagert. Es handelt sich insoweit um einen mitfahrenden Kettenschubantrieb (1). Der Gehäusebeschlag (42) kann über eine entsprechende Schwenkbefestigung mit verschiedenen Rasten unterschiedliche Anbaustellungen und Positionen des Antriebsgehäuses (5) gegenüber dem Fensterrahmen (41) bieten.

Figur 10 und 11 zeigen den Kettenschubantrieb (1) in Draufsicht bzw. Stirnansicht gemäß Pfeil XI in Figur 10. Durch den geringen Gehäuseabstand "x" kann das Antriebsgehäuse (5) sehr nahe am Fensterflügel (40) und am Fensterrahmen (41) befestigt werden. Figur 12 zeigt diese Anordnung in der Seitenansicht gemäß Pfeil XII von Figur 10.

Die Kette (6) ist mit ihrem Ende bzw. dem Kettenmundstück (27) über einen Kettenbeschlag (43) drehbar am Fensterrahmen (41) befestigt. Die Verbindung erfolgt über einen eingeschobenen querliegenden Bolzen, der zur Demontage wieder herausgezogen werden kann.

In Abwandlung der gezeigten Ausführungsform kann die kinematische Zuordnung auch vertauscht sein, indem das Antriebsgehäuse (5) am Rahmen (41) und das Kettenende am Flügel (40) befestigt ist. Anstelle eines Fensters kann es sich auch um eine Klappe, eine Türe, eine Lichtkuppel oder um ein beliebig anderes bewegliches Verschlußelement für Gebäude und andere Einsatzbereiche handeln.

Figur 13 verdeutlicht im Detail die eingangs erwähnte ausrückbare Getriebestufe (4). Diese besteht aus einem ausrückbaren Zahnrad (32), das gegen die Wirkung einer Feder (33) auf seiner Welle (34) verschiebbar gelagert ist. Antriebsseitig kämmt der größere Teil des Zahnrades (35) mit einem Zahnrad (36), das eine der Verschiebelänge entsprechende Breite besitzt und stets im Eingriff mit dem Zahnrad (32) bleibt. Abtriebsseitig kämmt der kleinere Ritzelteil des Zahnrads (32) mit einem schmalen Zahnrad (36). Bei der axialen Verschiebung des Zahnrades (32) wird dieser Eingriff gelöst, so daß auf der Abtriebsseite ein Freilauf entsteht. Das Kettenritzel (11) kann sich mit seinem zugehörigen Abtriebsrad (31) und eventuellen weiteren Getriebestufen frei drehen mit der Folge, daß die Kette (6) von Hand aus dem Antriebsgehäuse (5) herausgezogen werden kann und gegebenenfalls auch wieder ein Stück eingeschoben werden kann.

Die Getriebestufe (4) kann durch Einwirkung von außen und ohne Öffnung des Antriebsgehäuses (5) ausgerückt werden. Hierfür ist ein Entriegelungsstecker (38) vorgesehen, der einen oder mehrere, vorzugsweise zwei, vorstehende Finger aufweist, die durch entsprechende vorbereitete Öffnungen im Antriebsgehäuse (5) greifen und auf das ausrückbare Zahnrad (32) drücken können. Figur 12 zeigt diese Zuordnung. Die Gehäuseöffnungen können bei Nichtgebrauch durch Blindstopfen verschlossen sein.

Abwandlungen der gezeigten Ausführungsform sind in verschiedener Weise möglich. Zum einen kann die Auslaßführung (13) anders gestaltet sein und eine andere Kinematik aufweisen. Dies gilt auch für ihre Bestandteile (14,22). Insbesondere kann hier auch eine Anpassung an andere Kettenformen stattfinden. Variabel ist zudem die Gestaltung und Anordnung des Stellelements (15). Die Schub- und Drucksteifigkeit der Kette (6) kann statt durch eine Rückenabstützung auch auf andere geeignete Weise erfolgen, was entsprechende Anpassungen des Kettenschubantriebs (1) nach sich zieht. Ferner sind die anderen Antriebsteile beliebig variabel. So kann z.B. ein Motor mit einem integrierten Getriebe vorhanden sein. Auf die ausrückbare Getriebestufe kann verzichtet werden oder der Freilauf auf andere Weise realisiert werden.

Der Kettenschubantrieb (1) kann ferner in einem Gehäuse (5) zwei oder mehr Ketten (6) mit beweglichen Auslaßführungen (13) und ein oder mehreren Motoren (2), Getriebe (3) und andere Antriebselemente aufweisen.

### BEZUGSZEICHENLISTE

- 1: Kettenschubantrieb
- 2: Motor
- 3: Getriebe
- 4: Getriebestufe ausrückbar
- 5: Antriebsgehäuse
- 6: Kette
- 7: Kettenlasche
- 8: Rücken
- 9: Rolle
- 10: Kettenaustritt
- 11: Kettenritzel
- 12: Drehachse, Ritzelachse
- 13: Auslaßführung
- 14: Führungsgehäuse, Laschenführung
- 15: Stellelement, Feder
- 16: Zapfen
- 17: Gehäuseanschlag
- 18: Kettenanschlag
- 19: Führungskanal
- 20: Kanalöffnung
- 21: Führungsprofil
- 22: Rollenführung
- 23: Führungsbogen
- 24: Einlauf
- 25: Auslauf
- 26: Zahn
- 27: Kettenmundstück
- 28: Auge
- 29: Führungsfinger
- 30: Gabelarm
- 31: Abtriebsrad
- 32: Zahnrad ausrückbar
- 33: Feder
- 34: Welle
- 35: Zahnrad
- 36: Zahnrad
- 37: Gehäuseöffnung
- 38: Entriegelungsstecker
- 39: Fenster
- 40: Öffnungsteil, Flügel
- 41: Rahmen
- 42: Gehäusebeschlag
- 43: Kettenbeschlag
- 44: Anschlagelement
- 45: Stellschraube
- 46: Ansatz

- a: Kettenführungswinkel
- x: Gehäuseabstand

## Patentansprüche

1. Kettenschubantrieb mit einem Motor (2), einer hiervon angetriebenen Kette (6) und einem Gehäuse (5) mit einem Kettenaustritt (10), **dadurch gekennzeichnet, dass** am Kettenaustritt (10) eine bewegliche und den Kettenführungswinkel α verändernde Auslassführung (13) für die Kette (6) angeordnet ist.

2. Kettenschubantrieb nach Anspruch 1, **dadurch gekennzeichnet, dass** die Auslassführung (13) um die Drehachse (12) eines Kettenritzels (11) am Kettenaustritt (10) schwenkbar ist.

3. Kettenschubantrieb nach Anspruch 1 oder 2, **dadurch gekennzeichnet, dass** der Kettenschubantrieb (1) ein Stellelement (15), vorzugsweise eine Feder, aufweist, das die Auslassführung (13) in die Schwenkstellung bewegt.

4. Kettenschubantrieb nach Anspruch 1, 2 oder 3, **dadurch gekennzeichnet, dass** der Kettenschubantrieb (1) ein verstellbares Anschlagelement (44) zur Begrenzung des Schwenkwegs der Auslassführung (13) aufweist.

5. Kettenschubantrieb nach einem der Ansprüche 2 bis 4, **dadurch gekennzeichnet, dass** die Auslassführung (13) ein um die Ritzelachse (12) schwenkbar gelagertes Führungsteil (14) und ein relativ ortsfestes Führungsteil (22) für die Kette (6) aufweist.

6. Kettenschubantrieb nach Anspruch 5, **dadurch gekennzeichnet, dass** das schwenkbare Führungsteil (14) als hohles Führungsgehäuse für die Kettenlaschen (7) und das relativ ortsfestes Führungsteil (22) als Rollenführung (22) für die Rollen (9) der Kette (6) ausgebildet sind, wobei das Führungsgehäuse (14) zumindest teilweise die Rollenführung (22) und das Kettenritzel (11) umgreift.

7. Kettenschubantrieb nach Anspruch 6, **dadurch gekennzeichnet, dass** die Rollenführung (22) einen konzentrisch um die Ritzelachse (12) gekrümmten Führungsbogen (23) für die Rollen (9) aufweist.

8. Kettenschubantrieb nach Anspruch 7, **dadurch gekennzeichnet, dass** der Führungsbogen (23) sich über einen 90°-Winkel erstreckt und einen parallel zur Längsachse des Antriebsgehäuses (5) gerichteten Einlauf (24) aufweist, wobei das Kettenritzel (11) und der Führungsbogen (23) die Rollen (9) zwischen sich einspannen und führen.

9. Kettenschubantrieb nach einem der Ansprüche 5 bis 8, **dadurch gekennzeichnet, dass** das Führungsgehäuse (14) zumindest auslassseitig einen im wesentlichen geraden Führungskanal (19) zur Führung der Kette (6) aufweist, der zumindest im Bereich der Kanalöffnung (20) ein dem Kettenquerschnitt nachgebildetes Führungsprofil (21) besitzt.

10. Kettenschubantrieb nach einem der Ansprüche 5 bis 9, **dadurch gekennzeichnet, dass** das Führungsgehäuse (14) einen Kettenanschlag (18) zur Anlage des Kettenendes oder eines endseitigen Kettenmundstücks (27) aufweist.

11. Kettenschubantrieb nach einem der Ansprüche 1 bis 10, **dadurch gekennzeichnet, dass** die Kette (6) schubfest, vorzugsweise rückensteif, ausgebildet ist.

12. Kettenschubantrieb nach einem der Ansprüche 2 bis 11, **dadurch gekennzeichnet, dass** das mit dem Motor (2) verbundene Kettenritzel (11) eine Zykloidverzahnung oder eine ähnliche Verzahnung aufweist.

13. Kettenschubantrieb nach einem der Ansprüche 1 bis 12, **dadurch gekennzeichnet, dass** der Kettenschubantrieb (1) ein Getriebe (3) mit einer ausrückbaren Getriebestufe (4) aufweist.

## Claims

1. Chain thrust drive having a motor (2), a chain (6) driven thereby and a housing (5) with a chain outlet (10), **characterized in that** at the chain outlet (10) there is arranged an outlet guide (13), for the chain (6), which can move and changes the chain guide angle α.

2. Chain thrust drive according to Claim 1, **characterized in that** the outlet guide (13) can be pivoted about the axis of rotation (12) of a chain pinion (11) at the chain outlet (10).

3. Chain thrust drive according to Claim 1 or 2, **characterized in that** the chain thrust drive (1) has an actuating element (15), preferably a spring, which moves the outlet guide (13) into the pivoted position.

4. Chain thrust drive according to Claim 1, 2 or 3, **characterized in that** the chain thrust drive (1) has an adjustable stop element (44) to limit the pivoting travel of the outlet guide (13).

5. Chain thrust drive according to one of Claims 2 to 4, **characterized in that** the outlet guide (13) has a guide part (14) mounted such that it can pivot about the pinion axis (12), and a relatively stationary guide part (22) for the chain (6).

6. Chain thrust drive according to Claim 5, **characterized in that** the pivotable guide part (14) is designed as a hollow guide housing for the chain plates (7), and the relatively stationary guide part (22) is designed as a roller guide (22) for the rollers (9) of the chain (6), the guide housing (14) engaging at least partly around the roller guide (22) and the chain pinion (11).

7. Chain thrust drive according to Claim 6, **characterized in that** the roller guide (22) has a guide elbow (23) for the rollers (9), which is curved concentrically around the pinion axis (12).

8. Chain thrust drive according to Claim 7, **characterized in that** the guide elbow (23) extends over a 90° angle and has an inlet (24) oriented parallel with the longitudinal axis of the drive housing (5), the chain pinion (11) and the guide elbow (23) clamping and guiding the rollers (9) between them.

9. Chain thrust drive according to one of Claims 5 to 8, **characterized in that**, at least on the outlet side, the guide housing (14) has a substantially rectilinear guide channel (19) for guiding the chain (6), which, at least in the area of the channel opening (20), has a guide profile (21) which simulates the chain cross section.

10. Chain thrust drive according to one of Claims 5 to 9, **characterized in that** the guide housing (14) has a chain stop (18) to make contact with the end of the chain or with a chain mouthpiece (27) at the end.

11. Chain thrust drive according to one of Claims 1 to 10, **characterized in that** the chain (6) is designed to resist thrust, preferably to have a stiff back.

12. Chain thrust drive according to one of Claims 2 to 11, **characterized in that** the chain pinion (11) connected to the motor (2) has cycloidal toothing or similar toothing.

13. Chain thrust drive according to one of Claims 1 to 12, **characterized in that** the chain thrust drive (1) has a gearbox (3) with a gear stage (4) that can be disengaged.

## Revendications

1. Entraînement à chaîne en poussée, comportant un moteur (2), une chaîne (6) entraînée par ce moteur et un carter (5) pourvu d'une sortie (10) de chaîne, **caractérisé en ce qu'**un guide (13) de sortie pour la chaîne (6) est prévu à la sortie (10) de chaîne, guide qui est mobile et qui modifie l'angle (á) de guidage de la chaîne.

2. Entraînement à chaîne en poussée suivant la revendication 1, **caractérisé en ce que** le guide (13) de sortie est pivotant à la sortie (10) de chaîne autour de l'axe (12) de rotation d'un pignon (11) de chaîne.

3. Entraînement à chaîne en poussée suivant la revendication 1 ou 2, **caractérisé en ce que** l'entraînement (1) à chaîne en poussée comporte un élément (15) d'actionnement, de préférence un ressort, qui déplace le guide (13) de sortie dans la position pivotée.

4. Entraînement à chaîne en poussée suivant la revendication 1, 2 ou 3, **caractérisé en ce que** l'entraînement (1) à chaîne en poussée comporte un élément (44) de butée réglable, pour limiter la course de pivotement du guide (13) de sortie.

5. Entraînement à chaîne en poussée suivant l'une des revendications 2 à 4, **caractérisé en ce que** le guide (13) de sortie comporte une partie (14) de guide montée à pivotement autour de l'axe (12) du pignon et une partie (22) de guide à position relative fixe, pour la chaîne (6).

6. Entraînement à chaîne en poussée suivant la revendication 5, **caractérisé en ce que** la partie (14) de guide pivotante est réalisée sous la forme de boîtier de guidage creux pour les maillons (7) de chaîne et la partie (22) de guide à position relative fixe sous la forme de guide (22) de rouleaux pour les rouleaux (9) de la chaîne (6), le boîtier (14) de guidage entourant au moins partiellement le guide (22) de rouleaux et le pignon (11) de chaîne.

7. Entraînement à chaîne en poussée suivant la revendication 6, **caractérisé en ce que** le guide (22) de rouleaux comporte un coude (23) de guidage pour les rouleaux (9), à courbure concentrique autour de l'axe (12) du pignon.

8. Entraînement à chaîne en poussée suivant la revendication 7, **caractérisé en ce que** le coude (23) de guidage s'étend sur un angle de 90° et comporte une entrée (24) orientée parallèlement à l'axe longitudinal du carter (5) d'entraînement, le pignon (11) de chaîne et le coude (23) de guidage enserrant et guidant entre eux les rouleaux (9).

9. Entraînement à chaîne en poussée suivant l'une des revendications 5 à 8, **caractérisé en ce que** le boîtier (14) de guidage comporte au moins du côté de sortie un canal (19) de guidage sensiblement rectiligne pour guider la chaîne (6), canal qui possède, au moins dans la région de l'ouverture (20) du canal, un profil (21) de guidage reproduisant la section transversale de la chaîne.

10. Entraînement à chaîne en poussée suivant l'une des revendication 5 à 9, **caractérisé en ce que** le boîtier (14) de guidage comporte une butée (18) de chaîne pour l'application de l'extrémité de la chaîne ou d'un embout (27) terminal de chaîne.

11. Entraînement à chaîne en poussée suivant l'une des revendications 1 à 10, **caractérisé en ce que** la chaîne (6) est réalisée résistante en poussée, de préférence à dos rigide.

12. Entraînement à chaîne en poussée suivant l'une des revendications 2 à 11, **caractérisé en ce que** le pignon (11) de chaîne relié au moteur (2) comporte une denture cycloïdale ou une denture analogue.

13. Entraînement à chaîne en poussée suivant l'une des revendications 1 à 12, **caractérisé en ce que** l'entraînement (1) à chaîne en poussée comporte une transmission (3) avec un étage (4) de transmission débrayable.
